# EUROPÄISCHE PATENTSCHRIFT

(11) **EP 1 477 066 B1**
(45) Veröffentlichungstag und Bekanntmachung des Hinweises auf die Patenterteilung: **31.08.2005**
(21) Anmeldenummer: 03010750.2
(22) Anmeldetag: 14.05.2003
(51) Int. Cl.: A21D 13/00

(54) **Verfahren zum Markieren von Backwaren vor dem Backen**
Method for marking bakery products before baking
Procédé de marquage des produits de boulangerie avant la cuisson

(43) Veröffentlichungstag der Anmeldung: 17.11.2004
(73) Patentinhaber: Brinker, Karl, 44629 Herne (DE)
(72) Erfinder: Köhler, Dietmar, 44899 Gelsenkirchen (DE)
(74) Vertreter: COHAUSZ DAWIDOWICZ HANNIG & SOZIEN

(56) Entgegenhaltungen:
- EP-A- 0 520 136
- DE-A- 2 832 553
- US-A- 4 223 204
- US-A- 5 079 015
- US-A1- 2003 003 204

## Beschreibung

Die Erfindung betrifft ein Verfahren zum Markieren von Backwaren insbesondere von Brötchen oder Brot mit einem Kennzeichen insbesondere einem Buchstaben und/oder einer Grafik.

Es ist bekannt, Backwaren dadurch zu markieren, dass eine flüssige Substanz, Mehl, Teig, Salz oder ein backstabiler Träger aufgebracht wird. Diese bekannten Verfahren sind aufwendig und verändern die Backware so stark, dass der Verbraucher dem Produkt weniger vertraut. In US-A-4 223 203 ist die Heißmarkierung von ausgebackenen Brötchen ("branding") beschrieben.

Aufgabe der Erfindung ist es, ein Verfahren der eingangs genannten Art so zu verbessern, dass bei geringem technischen und Arbeitsaufwand und ohne Zufügung eines zusätzlichen Materials eine sichere und leicht erkennbare Kennzeichnung erreicht wird.

Diese Erfindung wird erfindungsgemäß dadurch gelöst, dass auf die Außenfläche des Teiges vor seinem Backen ein Stempel aufgedrückt wird, dessen das Kennzeichen bildende Stempelfläche auf eine solch hohe Temperatur erwärmt wird, dass die Teigoberfläche an den Berührungsstellen in der Teigstruktur verändert insbesondere angebacken wird.

Ein solches Verfahren führt zu einer Kennzeichnung mit hellen Linien oder Flächen nach dem Backen, so dass das Produkt weiterhin appetitlich aussieht und keine dunklen insbesondere verbrannten Stellen besitzt. Hierbei ist das Verfahren einfach und in kürzester Zeit durchführbar, so dass auch hohe Stückzahlen herstellbar sind.

Besonders vorteilhaft ist es, wenn der Teig nach seiner Gärung mit dem Stempel berührt wird. Auch wird vorzugsweise vorgeschlagen, dass die Stempelfläche auf eine Temperatur von 150 bis 300 Grad Celsius, vorzugsweise auf eine Temperatur von 200 bis 250 Grad Celsius erwärmt wird.

Ein Ausführungsbeispiel des erfindungsgemäßen Verfahrens wird im folgenden näher beschrieben.

Nachdem der Teig in Portionen aufgeteilt und jede dieser Portionen geformt wurde, werden die Formlinge einem Gärungsprozess unterworfen. Nach der Gärung und noch vor dem Backen wird auf die Außenfläche des gegärten Teiges ein erhitzter Stempel aufgedrückt, dessen Stempelfläche das gewählte Kennzeichen bildet.

Die Stempelfläche und insbesondere der gesamte Stempel besteht vorzugsweise aus Metall insbesondere aus Messing. Die Stempelfläche wird auf eine Temperatur von 200 bis 250 Grad Celsius erwärmt, ehe sie auf die Außenseite des Teiglings gedrückt wird. Die Erwärmung der Stempelfläche kann auf unterschiedlichste Art erfolgen, zum Beispiel durch Erwärmung der Rückseite des Stempels oder durch eine innere Heizung.

Durch das Erwärmen der gewünschten Stellen der Teigoberfläche werden diese in ihrer Struktur verändert insbesondere angebacken, wobei diese Veränderung auch noch nach dem Backen des gesamten Teigs gut sichtbar ist. Diese sichtbaren Stellen sehen nicht gebrannt und damit dunkel, sondern gegenüber der übrigen gebackenen Oberfläche heller aus.

Die erwärmte Stempelfläche bleibt an der Teigoberfläche aufgrund ihrer Erwärmung nicht kleben.

Das Verfahren kann bei unterschiedlichsten Backwaren insbesondere bei Brötchen und Brot angewendet werden. Die Stempelfläche kann die unterschiedlichsten Kennzeichen insbesondere Buchstaben und/oder eine Grafik aufweisen.

## Patentansprüche

1. Verfahren zum Markieren von Backwaren insbesondere von Brötchen oder Brot mit einem Kennzeichen insbesondere einem Buchstaben und/oder einer Grafik,**dadurch gekennzeichnet, dass** auf die Außenfläche des Teiges vor seinem Backen ein Stempel aufgedrückt wird, dessen das Kennzeichen bildende Stempelfläche auf eine solch hohe Temperatur erwärmt wird, dass die Teigoberfläche an den Berührungsstellen in der Teigstruktur verändert insbesondere angebacken wird.

2. Verfahren nach Anspruch 1,**dadurch gekennzeichnet, dass** der Teig nach seiner Gärung mit dem Stempel berührt wird.

3. Verfahren nach Anspruch 1 oder 2, **dadurch gekennzeichnet, dass** die Stempelfläche auf eine Temperatur von 150 bis 300 Grad Celsius, vorzugsweise auf eine Temperatur von 200 bis 250 Grad Celsius erwärmt wird.

## Claims

1. A method for marking bakery products, in particular rolls or bread, with a mark, in particular a letter and/or a graphical symbol, **characterized by** the fact that a stamp is pressed onto the outer surface of the dough before it is baked, the stamp surface forming the mark being heated to such a high temperature that the structure of the dough at the dough surface is changed, in particular prebaked, at the points of contact.

2. A method according to claim 1, **characterized by** the fact that the dough is touched with the stamp after it has fermented.

3. A method according to claim 1 or 2, **characterized by** the fact that the stamp surface is heated to a temperature of 150 to 300 degrees Celsius, preferably to a temperature of 200 to 250 degrees Celsius.

## Revendications

1. Un procédé de marquage de produits de boulangerie, en particulier de petits pains ou du pain, par un signe caractéristique, en particulier par une lettre et/ou une forme graphique, **caractérisé en ce qu'**avant la cuisson, sur la surface extérieure de la pâte, est apposé un poinçon, dont la surface de poinçonnage formant le signe caractéristique est chauffée à une température suffisamment élevée pour que la surface de la pâte soit modifiée en termes de structure, en particulier cuite, au niveau des surfaces de contact.

2. Un procédé selon la revendication n° 1, **caractérisé en ce que** le poinçon touche la pâte après la fermentation de celle-ci.

3. Un procédé selon la revendication n° 1 ou n° 2, **caractérisé en ce que** la surface de poinçonnage est chauffée à une température allant de 150 à 300 degrés Celsius, en particulier à une température située entre 200 et 250 degrés Celsius.
